# EUROPÄISCHE PATENTSCHRIFT

(11) **EP 1 613 419 B1**
(45) Veröffentlichungstag und Bekanntmachung des Hinweises auf die Patenterteilung: **25.04.2018**
(21) Anmeldenummer: 04719374.3
(22) Anmeldetag: 11.03.2004
(51) Int. Cl.: B01D 63/16

(54) **FILTRATIONSVORRICHTUNG**
FILTERING DEVICE
DISPOSITIF DE FILTRATION

(30) Priorität: 14.04.2003 DE 10317274
(43) Veröffentlichungstag der Anmeldung: 11.01.2006
(73) Patentinhaber: GEA Mechanical Equipment GmbH, 59302 Oelde (DE)
(72) Erfinder: MACKEL, Wilfried, 59302 Oelde (DE); TIETZ, Helga, 59302 Oelde (DE)
(74) Vertreter: Specht, Peter
(86) Internationale Anmeldenummer: PCT/EP2004/002482
(87) Internationale Veröffentlichungsnummer: WO 2004/089519

(56) Entgegenhaltungen:
- WO-A-00/47312
- WO-A-02/07478
- DE-A- 10 019 674
- US-A- 4 698 156
- US-A- 4 975 188
- PATENT ABSTRACTS OF JAPAN Bd. 0183, Nr. 71 (C-1224), 13. Juli 1994 (1994-07-13) & JP 6 099041 A (HITACHI PLANT ENG & CONSTR CO LTD), 12. April 1994 (1994-04-12)

## Beschreibung

Die Erfindung betrifft eine Filtrationsvorrichtung nach dem Oberbegriff des Anspruchs 1.
Derartige Filtrationseinrichtungen sind an sich bekannt, z.B. aus dem Gebiet der Separatoren, wo es bekannt ist, auf das Zulaufrohr axial zueinander versetzte Membranteller aufzusetzen.

Die US 4 975 188 A1 und die US 4 698 156 A offenbaren Zentrifugalfilter mit einem Behälter, der in einem oberen Teil zylindrisch und in einem unteren Teil konisch ausgebildet ist. Eine Spindel mit Filtertellern im Behälter wird von einem Motor angetrieben.
Einen gattungsgemäßen Stand der Technik zeigt ferner die DE 100 19 674 A. Einen analogen Stand der Technik offenbart die WO 00/47312. Die vertikal ausgerichteten Spindeln mit Filtertellern im Behälter werden von einem Antrieb außerhalb eines stationären Behälters angetrieben. Die JP 60999041 A offenbart einen Behälter mit horizontal ausgerichteten Spindeln, wiederum von einem Antrieb außerhalb eines stationären Behälters angetrieben werden.
Zum technologischen Hintergrund sei ferner die WO 02/07478 A2 genannt.
Die gattungsgemäße Anordnung der DE 100 19 674 A hat sich an sich gut bewährt. Es besteht aber dennoch der Bedarf nach einer Filtrationseinrichtung mit Filterscheiben, insbesondere Membranscheiben, welche eine gute Filtrationswirkung bei besonders einfachem konstruktivem Aufbau und geringem Energieverbrauch ermöglicht. Die Realisierung einer derartigen Filtrationsvorrichtung ist die Aufgabe der Erfindung.
Die Erfindung löst diese Aufgabe durch den Gegenstand des Anspruchs 1.

Es mündet der Zulauf tangential in den zumindest abschnittsweise zylindrischen Behälter, was zu einer Vorabscheidung aufgrund der Zentrifugalwirkung und zur einfachen Möglichkeit des alleinigen Antriebs der Teller mit den Spindeln durch die zirkulierende Flüssigkeit führt.

Die Anordnung zeichnet sich durch einen einfachen Aufbau mit einem stationären, nicht drehbarem Behälter und einen geringen Energiebedarf bei guter Filtrationswirkung aus.

Es ist der Durchmesser der Membranteller so groß, dass sich die Membranteller benachbarter Spindeln in ihrem Außenumfangsbereich überlappen, wobei die Membranteller benachbarter Spindeln entsprechend axial versetzt zueinander angeordnet sind.

Der Überlapp- bzw. Überdeckungsbereich bietet insbesondere den Vorteil einer besonders geringen Gefahr der Ausbildung einer Abdeckschicht aus Feststoffen auf den Membranscheiben und erhöht damit die sanitäre Eignung bzw. Auslegung.

Vorzugsweise ist eine Mehrzahl der Spindeln gleichmäßig auf einem Kreis mit einem Radius "r" im Behälter verteilt.

Nach einer weiteren vorteilhaften Variante ist die Anzahl der Spindeln gerade, so dass eine weitgehend symmetrische Anordnung, bei welcher sich die Membranteller aller Spindeln überlappen können, realisiert wird.

Es ist zweckmäßig, dass zur Realisierung einer genügenden Verarbeitungskapazität auf jeder Spindel eine Vielzahl der Membranteller (z.B. zehn oder mehr) angeordnet ist.

Bevorzugt weist der Behälter eine hydrozyklonartige Formgebung auf. Hierdurch wird in besonders vorteilhafter Weise eine Vorabscheidung von Feststoffpartikeln erreicht, die zu einer minimierten Feststoffbeaufschlagung der Membranteller führt. Der von den Membranflächen zurückgehaltene Feststoff wird durch den Wirbel der Spindeln und der Membranteller nach außen - weg von den Membranen - und dann durch die Schwerkraft zwangsweise nach unten abgeleitet.

Vorteilhafte Ausgestaltungen sind den Unteransprüchen zu entnehmen.

Nachfolgend wird die Erfindung unter Bezug auf die Zeichnung anhand von Ausführungsbeispielen näher beschrieben. Es zeigt:
- Fig. 1: einen Schnitt durch ein Ausführungsbeispiel einer Filtrationsvorrichtung; und
- Fig. 2: einen zu Fig. 1 senkrechten, weiteren Schnitt durch die Filtrationsvorrichtung aus Fig. 1.

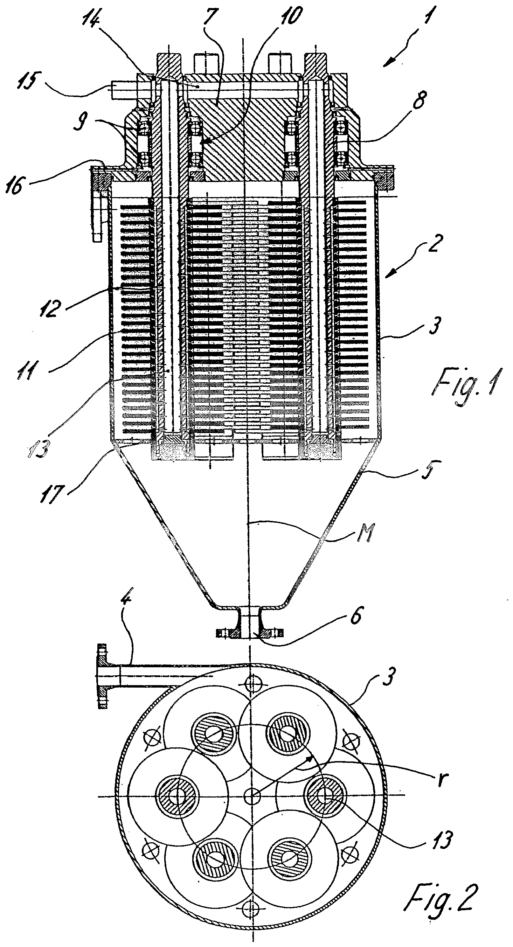

Fig. 1 zeigt eine Filtrationsvorrichtung 1 mit einem stationären, nicht drehbaren Behälter 2, welcher eine hydrozyklonartige Formgebung aufweist. An einen zylindrischen Abschnitt 3 des Behälters 2 mit hier senkrecht bzw. vertikal ausgerichteter Mittelachse M und mit einem tangential ausgerichteten Zulauf 4 schließt sich nach unten hin ein sich verjüngender, konischer Abschnitt 5 an, der nach unten hin in einen Auslaß 6 mündet.

Durch den tangentialen Zulauf 4 kann bei genügender Produktzulaufgeschwindigkeit auf einen motorischen Antrieb verzichtet werden, denn der entstehende Drall treibt die Membranscheiben 11 durch die entstehende Reibung an.
Der Behälter 2 bzw. dessen zylindrischer Abschnitt 3 ist an seiner Oberseite mit einer Art Deckel verschlossen, welcher zugleich als Lagergehäuse 7 für mehrere Spindeln 8 dient, welche jeweils von oben her in den Behälter 2 hineinragen und die parallel zueinander ausgerichtet sind.

Die Spindeln 8 ragen hier bis zum Beginn des konischen Abschnitts 5 in den Behälter 2 hinein. Sie sind beispielhaft jeweils mittels zwei Lagern 9 in Bohrungen 10 des Lagergehäuses 6 drehbar nach Art einer fliegenden Lagerung gelagert. Die fliegende Lagerung der hier vorteilhaft vertikal ausgerichteten Spindeln 11 bietet den Vorteil eines besonders sanitären Produktraums im Behälter 2 und den weiteren Vorteil eines reduzierten Bauteil- und Dichtungsaufwandes. Falls notwendig, kann ein Siebblech 17 am vom Lagergehäuse 7 abgewandten Ende zur Abstützung und Reibungsdämpfung der Spindeln 8 eingesetzt werden, welches die Spindeln 8 durchsetzen. Diese Maßnahme wirkt sich insbesondere beim Durchfahren der kritischen Drehzahl positiv aus.

Die Lager 9 sind durch Leckageabläufe 16 vor einem Produktüberlauf geschützt.

Besonders vorteilhaft ist eine gerade Anzahl von Bohrungen 10 mit den Spindeln 8 - hier beispielhaft insgesamt sechs Spindeln 8 - gleichmäßig auf einem Kreis mit einem Radius r verteilt, durch dessen Mittelpunkt die Mittelachse M des Behälters 2 verläuft.

Auf jeder der Spindeln 8 sind in deren in den Behälter 2 ragenden Bereich wenigstens zwei oder mehr (beispielsweise über zehn) bzw. bevorzugt eine Vielzahl von Membrantellern 11 angeordnet, welcher hier rund ausgebildet sind und welche konzentrisch zu den Spindeln 8 ausgerichtet sind.

Die Membranteller 11 bestehen bevorzugt aus einer Keramik. Sie weisen ferner bevorzugt einen zweischichtigen Aufbau auf, wobei zwischen den beiden oberen und unteren Keramikschichten ein Ringraum (hier nicht zu erkennen) ausgebildet ist, welcher jeweils nach innen zu den Spindeln 8 hin in jeweils mindestens einen Kanal 12 mündet, welche wiederum jeweils in senkrecht in den Spindeln nach oben mündende Ableitungskanäle 13 führen, die wiederum an ihren oberen Enden in einen gemeinsamen (Ring-)Ableitungsbohrung 14 im Lagergehäuse 6 münden, der mit einem Auslaß 15 zur Ableitung von Flüssigkeit aus der Filtrationsvorrichtung versehen ist.

Die Membranteller 11 weisen in axialer Richtung eine Breite b auf. Der axiale Abstand a der Membranteller 11 genügt dabei der Bedingung a > b, d.h., die Membranteller 11 sind axial auf den Spindeln 8 jeweils derart voneinander beabstandet, dass zwischen sie jeweils am äußeren Umfang der Rand eines weiteren Membrantellers 11 einschiebbar ist.

Dies wird wie folgt genutzt. Wie in Fig. 2 zu erkennen, ist der Durchmesser der Membranteller 11 jeweils so groß gewählt, dass sich die Membranteller 11 benachbarter Spindeln 8 in ihrem Außenumfangsbereich überlappen. Dazu müssen die Membranteller 11 auf benachbarten Spindeln 8 entsprechend axial versetzt zueinander angeordnet sein.

Diese Anordnung hat folgende Funktion:
Durch den tangentialen Zulauf 4 wird ein fließfähiges Filtrationsgut in die Filtrationsvorrichtung 1 bzw. in deren Behälter 2 geleitet. Die zuströmende Flüssigkeit nimmt die Membranteller 11 mit und versetzt derart die Spindeln 8 in jeweils Rotation.

Durch die hydrozyklonartige Formgebung wird eine Vorabscheidung erreicht, die zu einer minimierten Feststoffbeaufschlagung der Membran führt.

An den Membranscheiben 11 - insbesondere auch im Überlappungsbereich der Membranscheiben oder -teller 11 - werden weitere Feststoffe aus dem Filtrationsgut abschieden.

Die filtrierte Flüssigkeitsphase tritt durch die Membranen der Membranscheiben 11 in deren Ringraum und von dort durch die Kanäle 12 sowie durch die Ableitungskanäle 13 und die Ableitungsbohrung 14 und den Auslaß 15 nach außen.

Der von den Membranflächen der Membranteller 11 zurückgehaltene Feststoff wird durch den Wirbel nach außen, weg von der Membran geschleudert und dann nach unten durch den Auslaß 6 abgeleitet.

### Bezugszeichen

- Filtrationsvorrichtung: 1
- Behälter: 2
- zylindrischer Abschnitt: 3
- tangentialer Zulauf: 4
- konischer Abschnitt: 5
- Auslaß: 6
- Lagergehäuse: 7
- Spindeln: 8
- Lager: 9
- Bohrungen: 10
- Membranteller: 11
- Kanal: 12
- Ableitungskanäle: 13
- Ableitungsbohrung: 14
- Auslaß: 15
- Leckageabläufe: 16
- Siebblech: 17
- Mittelachse: M
- Abstand: a
- Breite: b

## Patentansprüche

1. Filtrationsvorrichtung (1) mit einem stationären Behälter (2) mit einem Zulauf, in dem wenigstens eine Spindel (8) angeordnet ist, auf welche axial zueinander versetzte Filterteller, insbesondere Membranteller (11), aufgesetzt sind, **dadurch gekennzeichnet, dass** im Behälter (2) mehr als zwei der mit den Filtertellern (11) versehenen Spindeln (8) verteilt sind und dass die Spindeln (8) relativ zum Behälter (2) drehbar sind, und dass der Zulauf (4) tangential in einen zylindrischen Abschnitt des Behälters (2) mündet, der eine vertikal ausgerichtete Mittelachse (M) aufweist und an den sich nach unten hin ein sich verjüngender, konischer Abschnitt (5) anschließt, der nach unten hin in einen Auslass (6) mündet, wobei der tangentiale Zulauf zu einer Vorabscheidung aufgrund der Zentrifugalwirkung und zu einem alleinigen Antrieb der Membranteller (11) mit den Spindeln (8) durch zirkulierende Flüssigkeit führt.

2. Filtrationsvorrichtung nach Anspruch 1 **dadurch gekennzeichnet, dass** eine Mehrzahl der Spindeln (8) gleichmäßig auf einem Kreis mit einem Radius "r" im Behälter (2) verteilt ist.

3. Filtrationsvorrichtung nach einem der vorstehenden Ansprüche, **dadurch gekennzeichnet, dass** die Spindeln (8) vertikal ausgerichtet sind.

4. Filtrationsvorrichtung nach einem der vorstehenden Ansprüche, **dadurch gekennzeichnet, dass** die Anzahl der Spindeln (8) gerade ist.

5. Filtrationsvorrichtung nach einem der vorstehenden Ansprüche, **dadurch gekennzeichnet, dass** der Durchmesser der Membranteller (11) so groß ist, dass sich die Membranteller (11) benachbarter Spindeln (8) in ihrem Außenumfangsbereich überlappen, wobei die Membranteller (11) benachbarter Spindeln (8) entsprechend axial versetzt zueinander angeordnet sind.

6. Filtrationsvorrichtung nach einem der vorstehenden Ansprüche, **dadurch gekennzeichnet, dass** der Behälter (2) mit einem Deckel verschlossen ist, welcher zugleich als Lagergehäuse (7) für die Spindeln (8) dient, welche parallel zueinander jeweils von oben her in den Behälter (2) hineinragen.

7. Filtrationsvorrichtung nach einem der vorstehenden Ansprüche, **dadurch gekennzeichnet, dass** die Spindeln (8) jeweils mittels Lagern (9) in Bohrungen (10) des Lagergehäuses (7) drehbar gelagert sind.

8. Filtrationsvorrichtung nach einem der vorstehenden Ansprüche, **dadurch gekennzeichnet, dass** die Spindeln (8) im Lagergehäuse (7) fliegend gelagert sind.

9. Filtrationsvorrichtung nach einem der vorstehenden Ansprüche, **dadurch gekennzeichnet, dass** die Lager (9) mittels Leckageabläufen (16) vor einem Produktüberlauf geschützt sind.

10. Filtrationsvorrichtung nach einem der vorstehenden Ansprüche, **dadurch gekennzeichnet, dass** die Membranteller (11) aus Keramik bestehen.

11. Filtrationsvorrichtung nach einem der vorstehenden Ansprüche, **dadurch gekennzeichnet, dass** die Membranteller (11) einen zweischichtigen Aufbau aufweisen, wobei zwischen den beiden oberen und unteren Keramikschichten ein Ringraum ausgebildet ist, welcher nach innen hin in in den Spindeln verlaufende Ableitungskanäle (13) mündet.

12. Filtrationsvorrichtung nach einem der vorstehenden Ansprüche, **dadurch gekennzeichnet, dass** die Ableitungskanäle (13) aus den Spindeln (8) in eine gemeinsamen Ableitungsbohrung (14) im Lagergehäuse (11) münden.

13. Filtrationsvorrichtung nach einem der vorstehenden Ansprüche, **dadurch gekennzeichnet, dass** die Membranteller (11) in axialer Richtung eine Dicke b aufweisen und dass der axiale Abstand a zwischen den Membrantellern (11) auf jeder Spindel (8) der Bedingung a > b genügt.

## Claims

1. Filtering device (1) having a stationary container (2) with an inlet in which at least one spindle (8) is arranged, on which axially mutually offset filtering plates, particularly diaphragm plates (11) are placed, **characterized in that** more than two of the spindles (8) provided with the filtering plates (11) are distributed in the container (2) and that the spindles (8) are rotatable relative to the container (2) and that the inlet (4) leads tangentially into a cylindrical section of the container (2), which has a vertically aligned central axis (M) and which is adjoined in the downward direction by a tapering, conical section (5) which leads in the downward direction into an outlet (6), wherein the tangential inlet leads to a pre-separation as a result of the centrifugal effect and to a mere driving of the diaphragm plates (11) with the spindles (8) by circulating liquid.

2. The filtering device according to claim 1, **characterized in that** a plurality of spindles (8) are uniformly distributed in the container (2) on a circle having a radius "r".

3. The filtering device according to one of the preceding claims, **characterized in that** the spindles (8) are vertically oriented.

4. The filtering device according to one of the preceding claims, **characterized in that** the number of spindles (8) is even.

5. The filtering device according to one of the preceding claims, **characterized in that** the diameter of the diaphragm plates (11) is so large that the diaphragm plates (11) of adjacent spindles (8) overlap in their outer circumference area, wherein the diaphragm plates (11) of adjacent spindles (8) are arranged in a correspondingly axially mutually offset manner.

6. The filtering device according to one of the preceding claims, **characterized in that** the container (2) is closed by a lid, which lid simultaneously serves as a bearing housing (7) for the spindles which spindles project in a mutually parallel manner from above into the container.

7. The filtering device according to one of the preceding claims, **characterized in that** the spindles (8) are each rotatably disposed by means of bearings (9) in bores (10) of the bearing housing (7).

8. The filtering device according to one of the preceding claims, **characterized in that** the spindles (8) are overmounted in the bearing housing (7).

9. The filtering device according to one of the preceding claims, **characterized in that** the bearings (9) are protected from a product overflow by means of leakage drains (16).

10. The filtering device according to one of the preceding claims, **characterized in that** the diaphragm plates (11) consist of ceramic.

11. The filtering device according to one of the preceding claims, **characterized in that** the diaphragm plates (11) have a two-layer construction, an annulus being constructed between the two upper and lower ceramic layers, which annulus leads towards the interior into discharge ducts (13) extending in the spindles.

12. The filtering device according to one of the preceding claims, **characterized in that** the discharge ducts (13) lead from the spindles (8) into a common discharge bore (14) in the bearing housing (11).

13. The filtering device according to one of the preceding claims, **characterized in that** the diaphragm plates (11) have a thickness b in the axial direction, and the axial spacing a between the diaphragm plates (11) on each spindle (8) satisfies the condition a > b.

## Revendications

1. Dispositif de filtration (1) avec une cuve stationnaire (2) munie d'une arrivée, dans laquelle est disposée au moins une broche (8) sur laquelle sont posés des disques filtrants, de préférence des disques à membrane (11), décalés les uns par rapport aux autres, **caractérisé en ce que** plus de deux broches (8) munies de disques filtrants (11) sont réparties dans la cuve (2) et **en ce que** les broches (8) peuvent tourner par rapport à la cuve (2) et **en ce que** l'arrivée (4) débouche de façon tangente dans une partie cylindrique de la cuve (2) qui présente un axe médian (M) vertical et auquel se raccorde vers le bas une partie conique (5) qui se resserre et qui débouche vers le bas dans un écoulement (6), l'arrivée tangente réalisant une séparation préalable sous l'effet de la force centrifuge et un entraînement des disques à membrane (11) avec les broches (8) par la seule action du liquide en circulation.

2. Dispositif de filtration selon la revendication 1, **caractérisé en ce qu'**un grand nombre de broches (8) sont réparties à intervalles réguliers dans la cuve (2) sur un cercle de rayon « r ».

3. Dispositif de filtration selon l'une des revendications précédentes, **caractérisé en ce que** les broches (8) sont orientées verticalement.

4. Dispositif de filtration selon l'une des revendications précédentes, **caractérisé en ce que** le nombre de broches (8) est pair.

5. Dispositif de filtration selon l'une des revendications précédentes, **caractérisé en ce que** le diamètre des disques à membrane (11) est tel que les disques à membrane (11) de broches (8) voisines se chevauchent dans leur zone de circonférence extérieure, les disques à membrane (11) de broches (8) étant décalés en conséquence les uns par rapport aux autres dans le sens axial.

6. Dispositif de filtration selon l'une des revendications précédentes, **caractérisé en ce que** la cuve (2) est fermée par un couvercle qui sert en même temps de logement de palier (7) pour les broches (8), qui dépassent parallèlement les unes aux autres par le haut dans la cuve (2).

7. Dispositif de filtration selon l'une des revendications précédentes, **caractérisé en ce que** les broches (8) sont supportées chacune avec possibilité de rotation au moyen de paliers (9) dans des alésages (10) du logement de palier (7).

8. Dispositif de filtration selon l'une des revendications précédentes, **caractérisé en ce que** les broches (8) sont supportées de façon flottante dans le logement de palier (7).

9. Dispositif de filtration selon l'une des revendications précédentes, **caractérisé en ce que** les paliers (9) sont protégées d'un débordement du produit au moyen d'évacuations de fuites (16).

10. Dispositif de filtration selon l'une des revendications précédentes, **caractérisé en ce que** les disques à membrane (11) sont faits de céramique.

11. Dispositif de filtration selon l'une des revendications précédentes, **caractérisé en ce que** les disques à membrane (11) présentent une structure à deux couches, avec entre les deux couches de céramique supérieure et inférieure un espace annulaire qui débouche vers l'intérieur dans les canaux d'évacuation (13) passant dans les broches.

12. Dispositif de filtration selon l'une des revendications précédentes, **caractérisé en ce que** les canaux d'évacuation (13) débouchent hors des broches (8) dans un alésage d'évacuation commun (14) dans le logement de palier (11).

13. Dispositif de filtration selon l'une des revendications précédentes, **caractérisé en ce que** les disques à membrane (11) présentent une épaisseur b dans le sens axial et **en ce que** la distance axiale a entre les disques à membrane (11) sur chaque broche (8) satisfait la condition a > b.
